# EUROPEAN PATENT APPLICATION

(11) **EP 4 328 013 A1**
(43) Date of publication of application: **28.02.2024**
(21) Application number: 23187913.1
(22) Date of filing: 26.07.2023
(51) Int. Cl.: B29C 70/52, B29C 33/06, B29K 101/12

(54) **CONTINUOUS MOLDING MACHINE**

(30) Priority: 22.08.2022 JP 2022131458
(71) Applicant: Tsudakoma Kogyo Kabushiki Kaisha, Kanazawa-shi, Ishikawa-ken 921-8650 (JP)
(72) Inventor: NISHIMURA, Isao, Kanazawa-shi, 921-8650 (JP)
(74) Representative: Zimmermann & Partner Patentanwälte mbB

(57) **Abstract**

A continuous molding machine (1) for manufacturing a fiber-reinforced composite material (5) by molding a sheet-like reinforcing fiber base material formed by impregnating thermoplastic resin into a reinforcing fiber material, in which the continuous molding machine includes a molding device (6) that performs a molding operation of pressurizing and molding a plurality of the overlapped reinforcing fiber base materials supplied from a supply device (4). The continuous molding machine (1) includes a heating device (8) including a non-contact heater provided between the supply device (4) and the molding device (6), and the heater is configured to be able to make a temperature of at least a direct heating target a melting point of the thermoplastic resin within a predetermined heating time according to a time of the molding operation.

## Description

### TECHNICAL FIELD

The present invention relates to a continuous molding machine for manufacturing a fiber-reinforced composite material by molding a sheet-like reinforcing fiber base material formed by impregnating thermoplastic resin into a reinforcing fiber material, in which the continuous molding machine includes a molding device configured to perform a molding operation of pressurizing and molding a plurality of the overlapped reinforcing fiber base materials supplied from a supply device.

### BACKGROUND ART

In recent years, fiber-reinforced composite materials have been used to form aircraftrelated parts, automobile-related parts, sports/leisure goods, and the like. The fiber-reinforced composite materials are manufactured by laminating reinforcing fiber base materials such as prepreg and then molding the laminate by applying pressure, heating, and the like.

For reference, the reinforcing fiber base material (prepreg) is formed in a sheet shape by impregnating a matrix resin into a reinforcing fiber material such as carbon fiber, glass fiber or aramid fiber. In addition, as the matrix resin, there are a thermosetting resin and a thermoplastic resin. However, it is known that a reinforcing fiber base material using the thermoplastic resin as a matrix resin is superior to that using the thermosetting resin in terms of moldability.

As an apparatus for continuously manufacturing such a fiber-reinforced composite material, there is, for example, a continuous molding machine disclosed in Patent Literature 1. The continuous molding machine includes a supply device equipped with a plurality of material rolls each formed by winding a sheet-like reinforcing fiber base material into a roll shape, and a molding device provided downstream of the supply device and configured to mold a reinforcing fiber base material. The continuous molding machine is configured such that a plurality of reinforcing fiber base materials supplied from the supply device are pulled out downstream in an overlapped state, and the plurality of overlapped reinforcing fiber base materials are heated and pressurized by a pressurization mold (heating mold) in the molding device and are thus molded as a fiber-reinforced composite material.

### CITATION LIST

### PATENT LITERATURE

Patent Literature 1: JPS64-004315A

Meanwhile, in the continuous molding machine of the related art as disclosed in Patent Literature 1, in the case where the reinforcing fiber base material to be molded is a sheet material made of thermoplastic prepreg using a thermoplastic resin as a matrix resin, when performing the molding described above in the molding device, heating for the molding in the molding device is performed at a temperature equal to or higher than a melting point of the matrix resin (thermoplastic resin) in order to weld the overlapped reinforcing fiber base materials each other.

Note that, in molding with the molding device, the molding is performed in a way of making the matrix resin (thermoplastic resin) in the reinforcing fiber base material into a semi-molten state (a state in which the resin is softened to the extent that it does not melt (liquefy)) by performing the heating with the pressurization mold as described above, and in that state, pressurizing the reinforcing fiber base material with the pressurization mold. In addition, when molding a plurality of overlapped reinforcing fiber base materials as described above, in heating with the pressurization mold, a reinforcing fiber base material in direct contact with the pressurization mold is directly heated, but a reinforcing fiber base material that is not in contact with the pressurization mold is heated by heat transferred after the reinforcing fiber base material with which it is in contact due to the overlapping is heated.

Therefore, there occurs a difference in time after heating (pressurization) by the pressurization mold is started until the matrix resin (thermoplastic resin) is in the semi-molten state between the reinforcing fiber base material that is in contact with the pressurization mold and the reinforcing fiber base material that is not in contact with the pressurization mold. For this reason, the reinforcing fiber base material in contact with the pressurization mold is continuously heated by the pressurization mold until all the reinforcing fiber base materials are in the semi-molten state, i.e., over a considerably longer time than the time required for the material itself to be in the semi-molten state. As a result, there may occur problems in that the matrix resin of the reinforced fiber base material in contact with the pressurization mold adheres to the pressurization mold, resulting in deterioration of a surface condition of the fiber-reinforced composite material to be molded and a decrease in the quality of the fiber-reinforced composite material.

### SUMMARY

Therefore, an object of the present invention is to provide a continuous molding machine capable of preventing as much as possible the occurrence of the problem in that the quality of the fiber-reinforced composite material to be molded is reduced, which problem occurs in the continuous molding machine of the related art as described above.

The preamble of the present invention is a continuous molding machine for manufacturing a fiber-reinforced composite material by molding a sheet-like reinforcing fiber base material formed by impregnating thermoplastic resin into a reinforcing fiber material, in which the continuous molding machine includes a molding device configured to perform a molding operation of pressurizing and molding a plurality of the overlapped reinforcing fiber base materials supplied from a supply device.

In addition, in order to achieve the above obj ect, the present invention is characterized in that the continuous molding machine of the preamble includes a heating device including a non-contact heater provided between the supply device and the molding device and the heater in the heating device is configured to be able to make a temperature of at least a direct heating target a melting point of the thermoplastic resin within a predetermined heating time according to a time of the molding operation.

Note that, in the present invention, the "direct heating target" of the heater refers to a portion of a member (target) heated by the heater, which faces the heater and directly receives heat from the heater. Therefore, in the case of the present invention, the reinforcing fiber base material is a target that is heated by the heating device (heater), the outermost reinforcing fiber base material among the plurality of reinforcing fiber base materials supplied from the supply device is a reinforcing fiber base material that faces the heater, and a portion of the outermost reinforcing fiber base material that is directly heated by the heater in the heating device is the direct heating target referred to herein.

In addition, the continuous molding machine according to the present invention may be configured such that the heating device includes a lateral heater that is the heater provided on a side of a path of the reinforcing fiber base material, and has a position changing structure capable of changing an attachment position of the lateral heater in a direction toward and away from the path. Further, in the configuration, the lateral heater may be provided in plural along a traveling direction of the reinforcing fiber base material.

The continuous molding machine of the present invention includes the heating device including, as a non-contact heater, the heater provided between the supply device and the molding device and configured to be able to make the temperature of at least a direct heating object the melting point of the thermoplastic resin within the heating time. Therefore, according to the continuous molding machine of the present invention, the thermoplastic resin (matrix resin) of at least a portion of the reinforcing fiber base material directly heated by the heater among the plurality of reinforcing fiber base materials supplied from the supply device can be made into a semi-molten state before the portion is introduced into the molding machine.

This makes it possible to shorten a time required for molding because at least a portion is in the semi-molten state, and furthermore, to shorten a time during which the pressurization mold is in contact with the reinforcing fiber base material, as compared with a device of the related art in which portions (molding portions), which are to be molded by the molding device, of the plurality of overlapped reinforcing fiber base materials are all heated to a state (semi-molten state) in which they can be molded by the molding device (pressurization mold). As a result, it is possible to prevent the occurrence of quality problems in the fiber-reinforced composite material as described above as much as possible, which are caused by the long-term contact between the pressurization mold and the reinforcing fiber base material.

Further, in the continuous molding machine according to the present invention, when the heating device (heater) is configured to set the temperature of all the thermoplastic resins in the plurality of reinforcing fiber base materials to the melting point, there is no need to heat the molding portions to be in the semi-molten state in the molding device (pressurization mold), and therefore, the temperature of the pressurization mold can be set to a lower temperature. In this case, it is possible to more effectively prevent the matrix resin from adhering to the pressurization mold.

Further, in the continuous molding machine that is the preamble of the present invention, when the fiber-reinforced composite material to be molded has a shape (for example, a cross sectional shape is a so-called C-shape or L-shape) having not only a flat plate-shaped portion but also a portion angled with respect to the flat plate-shaped portion, the heating device is preferably configured to include the lateral heater that is a heater provided on a side of the path of the reinforcing fiber base material so that not only the flat plate-shaped portion but also the angled portion can be directly heated by the heater.

Further, in the case where the heating device is configured to include the lateral heater as described above, the heating device is configured to have the position changing structure for enabling the attachment position of the lateral heater to be changed in the direction toward and away from the path. Thereby, even when the reinforcing fiber base material to be molded has been changed to one using a thermoplastic resin (matrix resin) having a different melting point or a shape of the fiber-reinforced composite material to be molded has been changed, the heating of the reinforcing fiber base material can be made as appropriate as possible by changing a distance between the reinforcing fiber base material and the lateral heater with the position changing structure.

Further, in the case where the heating device is configured to include the lateral heater and the position change structure, a plurality of lateral heaters is provided along the traveling direction of the reinforcing fiber base material, so that the reinforcing fiber base material whose cross-sectional shape gradually changes toward the molding device can be heated more appropriately at each position of the path along the traveling direction.

### BRIEF DESCRIPTION OF DRAWINGS

FIG. 1 is a side view showing a continuous molding machine to which the present invention is applied.
FIG. 2 illustrates a heating device according to the present invention (II-II cross-sectional view of FIG. 1).
FIG. 3 illustrates the heating device according to the present invention (III-III cross-sectional view of FIG. 2).
FIG. 4 illustrates a preliminary molding device (IV-IV cross-sectional view of FIG. 1).

### DESCRIPTION OF EMBODIMENTS

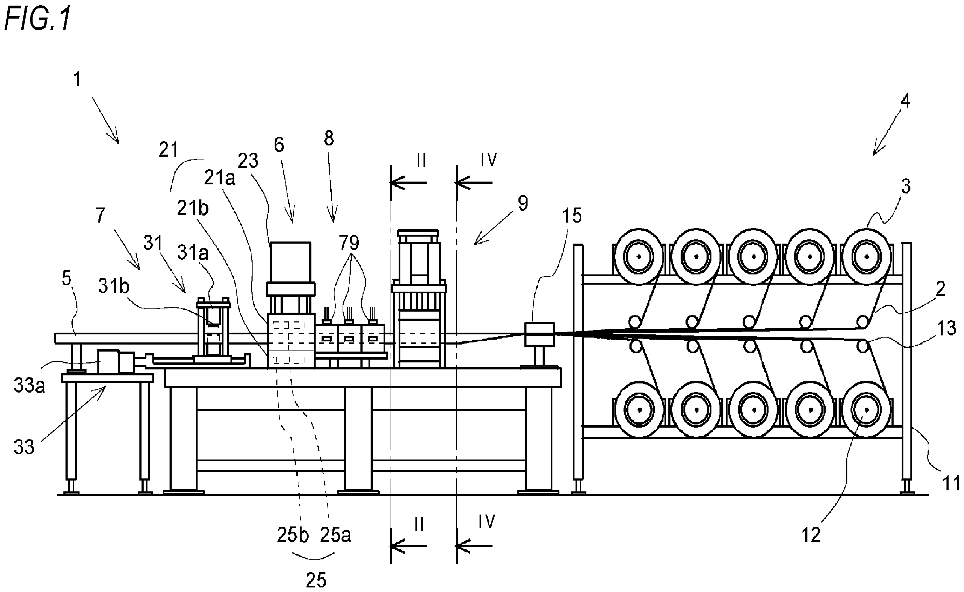

Hereinafter, one embodiment (embodiment) of a continuous molding machine to which the present invention is applied will be described with reference to FIGS. 1 to 4. Note that the reinforcing fiber base material referred to in the present invention is formed in a sheet shape by impregnating a thermoplastic resin as a matrix resin into a reinforcing fiber material such as carbon fiber, glass fiber, or aramid fiber, as described above. In the present embodiment, the reinforcing fiber base material is assumed as a thermoplastic prepreg made by impregnating a thermoplastic resin into carbon fiber as the reinforcing fiber material.

As shown in FIG. 1, a continuous molding machine 1 includes a supply device 4 to which a plurality of material rolls 3, 3,... are mounted. The material roll 3 referred to here is a roll formed by winding a sheet-like prepreg (hereinafter, referred to as "prepreg sheet") 2 into a roll shape. In addition, the continuous molding machine 1 includes a molding device 6 that performs a molding operation of pressurizing and molding a plurality of overlapped prepreg sheets 2, 2,... supplied from the supply device 4 into a fiber-reinforced composite material 5, and a pulling-out device 7 that performs a pulling-out operation of pulling out the fiber-reinforced composite material 5 molded by the molding device 6. Each device of the continuous molding machine 1 will be described as follows.

The supply device 4 has a plurality of (10, in the shown example) support shafts 12 provided in the form of being supported by a frame 11, and the material rolls 3 are attached to the support shafts 12, respectively. In addition, the supply device 4 includes guide rollers 13 provided in the form of corresponding to each of the support shafts 12. The prepreg sheets 2 pulled out from the 10(ten) material rolls 3 are each wound around the corresponding guide rollers 13 and turned toward a downstream side (a side where the molding device 6 is provided), and the ten prepreg sheets 2 are pulled out from the supply device 4 with being aligned vertically.

In addition, a sheet guide 15 for guiding the ten prepreg sheets 2 pulled out from the supply device 4 toward the downstream side in an overlapped state is provided between the supply device 4 and the molding device 6. The sheet guide 15 is configured to include two plate members provided at an interval in a vertical direction and a stand that supports the plate members. The interval between the two plate members is slightly larger than a sum of thicknesses of the prepreg sheets (10 sheets) 2. The ten prepreg sheets 2 (aligned vertically) pulled out from the supply device 4 are guided by the sheet guide 15, and are thus overlapped.

The molding device 6 includes a pressurization mold 21 for pressurizing the overlapped prepreg sheets 2. The pressurization mold 21 is configured by an upper mold 21a and a lower mold 21b having a shape corresponding to a cross-sectional shape of a fiber-reinforced composite material 5 to be molded. Note that, in the present embodiment, the fiber-reinforced composite material 5 to be molded is a fiber-reinforced composite material including portions (side portions) on both sides including each side edge and a portion (intermediate portion) between both side portions, and having such a shape that each side portion forms an angle with respect to the intermediate portion and the angle is about 90°, i.e., a so-called C-shaped cross-sectional shape. Accordingly, the upper mold 21a has a groove opening on a lower surface and a substantially inverted U-shaped cross-section. In addition, the lower mold 21b has a rectangular cross-sectional shape and is adapted to fit into the groove of the upper mold 21a with a slight gap therebetween. The upper mold 21a and the lower mold 21b are provided in the molding device 6 at positions that are above and below a path of the supplied prepreg sheets 2.

In addition, the molding device 6 includes a drive device 23 such as a hydraulic cylinder that drives the upper mold 21a in the vertical direction, and is configured to pressurize the prepreg sheets 2 located between the upper mold 21a and the lower mold 21b with a preset pressure.

In addition, the molding device 6 includes a heating mechanism 25 that heats the pressurization mold 21 to heat the prepreg sheets 2 being pressurized by the pressurization mold 21. The heating mechanism 25 includes an upper heating portion 25a built in the upper mold 21a and a lower heating portion 25b built in the lower mold 21b. The heating mechanism 25 is adapted to heat the upper mold 21a with the upper heating portion 25a and to heat the lower mold 21b with the lower heating portion 25b, thereby heating the prepreg sheets 2 at the time of pressurization. Note that the molding device 6 is connected to a main control device (not shown) of the continuous molding machine 1, and the main control device controls temperatures of the upper heating portion 25a and the lower heating portion 25b of the heat mechanism 25 so that the upper mold 21a and the lower mold 21b heat the prepreg sheets 2 at a preset temperature.

The pulling-out device 7 is provided on a downstream side of the molding device 6 with respect to a traveling direction of the prepreg sheets 2 in order to pull out the fiber-reinforced composite material 5 molded by the molding device 6. The pulling-out device 7 includes a gripping mechanism 31 that grips the molded fiber-reinforced composite material 5, and a pulling-out mechanism 33 that reciprocates the gripping mechanism 31 along the path of the fiber-reinforced composite material 5.

The gripping mechanism 31 includes a pair of upper and lower gripping plates provided with the path of the fiber-reinforced composite material 5 interposed therebetween, and is configured to move the upper gripping plate 31b downward by a drive device 31a such as an air cylinder to grip the fiber-reinforced composite material 5. In addition, the pulling-out mechanism 33 uses a servo motor 33a as a drive source, includes a moving mechanism such as a ball screw mechanism to which the gripping mechanism 31 is connected, and is configured to drive the moving mechanism by the servo motor 33a, thereby moving the gripping mechanism 31 in the traveling direction of the prepreg sheets 2. Note that the pulling-out mechanism 33 is configured to move the gripping mechanism 31 by a distance (hereinafter, referred to as "pulling-out amount") slightly smaller than a dimension of the pressurization mold 21 in the direction of the path.

According to the continuous molding machine 1 including the supply device 4, the molding device 6 and the pulling-out device 7 described above, in the molding device 6, the drive device 23 moves the upper mold 21a downward, so that a molding operation involving pressurization and heating is performed on the ten prepreg sheets 2 pulled out from the supply device 4 side in a state of being overlapped vertically as described above. Thereafter, along with completion of the molding operation, the upper mold 21a is moved upward to release the fiber-reinforced composite material 5 in the molding device 6, and the drive device 31a in the gripping mechanism 31 of the pulling-out device 7 moves the upper gripping plate 31b downward, so that the fiber-reinforced composite material 5 is gripped by the gripping mechanism 31.

Then, in the pulling-out mechanism 33 of the pulling-out device 7, the servo motor 33a is driven to move the gripping mechanism 31 in the traveling direction, so that a pulling-out operation in which the fiber-reinforced composite material 5 is pulled out by the pulling-out amount is performed. Thereby, in the molding device 6, the fiber-reinforced composite material 5 molded as described above is pulled out from the molding device 6 by the pulling-out amount, and the prepreg sheets 2 are newly supplied into the molding device 6. In addition, along with such a pulling-out operation, the prepreg sheet 2 corresponding to the pulling-out amount is also pulled out from each material roll 3 mounted to the supply device 4.

In this way, one molding operation including the molding operation by the molding device 6 and the pulling-out operation by the pulling-out device 7 is completed. Thereafter, the molding operation is performed again, and then the molding operation and the pulling-out operation are repeated, so that the fiber-reinforced composite material 5 is continuously molded.

In the continuous molding machine configured as described above, according to the present invention, the continuous molding machine includes a heating device including a non-contact heater provided between the supply device and the molding device and the heater is configured to be able to make a temperature of at least a direct heating target a melting point of a thermoplastic resin within a predetermined heating time according to a time of the molding operation. In addition, the heating device of the present embodiment includes a lateral heater that is a heater provided on a side of a path of the reinforcing fiber base material, and has a position changing structure capable of changing an attachment position of the lateral heater in a direction toward and away from the path. An embodiment (present embodiment) of the continuous molding machine will be described in detail below.

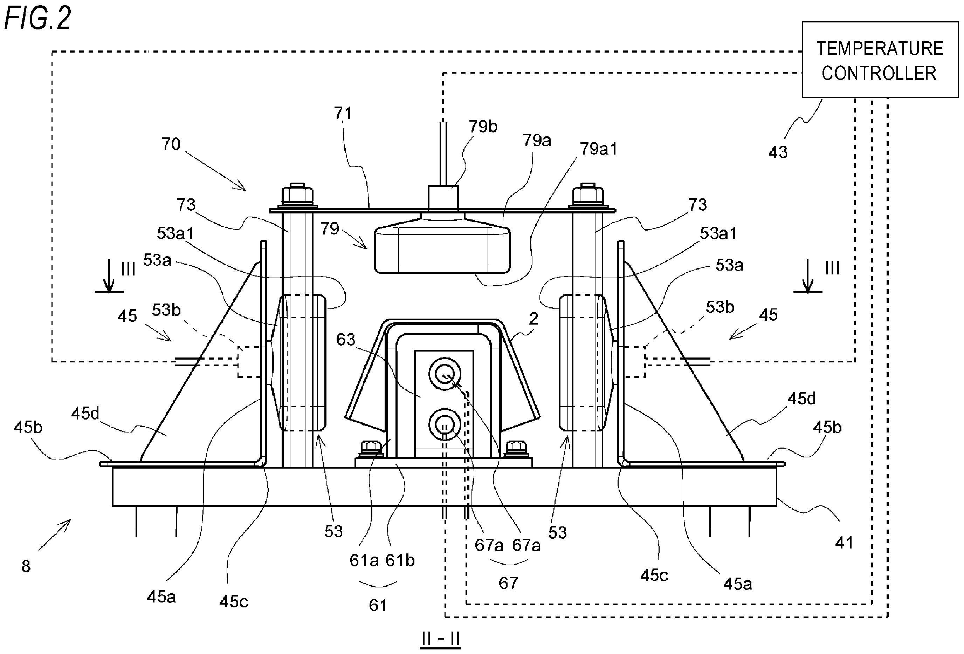

As shown in FIG. 1, the heating device 8 is provided between the supply device 4 (sheet guide 15) and the molding device 6. In addition, as shown in FIG. 2, the heating device 8 includes an upper heater 79 provided above the path of the prepreg sheets 2 and lateral heaters 53 provided on both sides of the path. In addition, the heating device 8 of the present embodiment includes a lower heater 67 provided below the path (on an inner side of the prepreg sheet 2). In addition, the heating device 8 includes a temperature controller 43 for controlling a temperature of each heater of the upper heater 79, the lateral heaters 53 and the lower heater 67. The heating device 8 will be described in detail as follows. Note that, in the present embodiment, it is assumed that each heater is a non-contact infrared heater that heats a heating target with infrared rays. However, in the present invention, the heater is not limited to the infrared heater, and may also be a heater that heats a heating target by, for example, high-frequency induction.

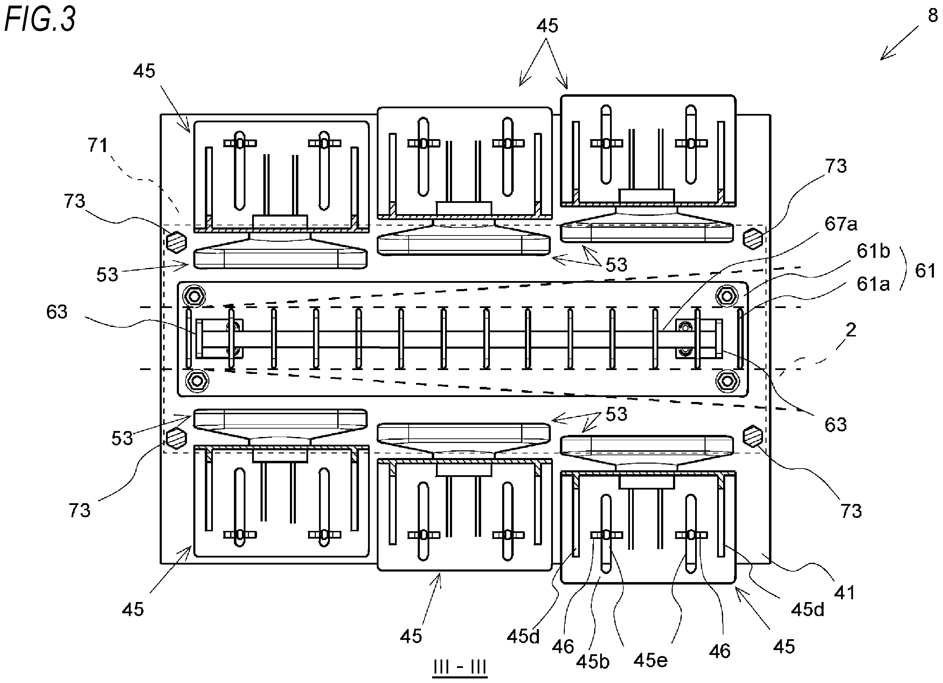

First, the heating device 8 has a guide structure 61 for guiding the prepreg sheets 2. As shown in FIGS. 2 and 3, the guide structure 61 includes a mounting base 61b installed on a base 41 of the heating device 8 and a plurality of guide members 61a attached to the mounting base 61b to form an inverted U-shape. The mounting base 61b is a plate member having a rectangular shape whose size in a direction of a long side is sufficiently larger than that in a direction of a short side when seen in a plate thickness direction. The mounting base 61b is installed on the base 41 in a state in which the direction of the long side coincides with the direction of the path. Note that the mounting base 61b is attached to the base 41 by screwing a screw member inserted into the mounting base 61b to the base 41.

In addition, as shown in FIG. 2, the guide member 61a is a member formed in such a way that a bar member is bent in an inverted U-shape and a portion (middle portion) between both bent portions and portions on end portions from the bent portions are formed straight. Each guide member 61a is erected on the mounting base 61b in such a form that both end portions are each fixed (screwed) to the mounting base 61b. In addition, as shown in FIG. 3, the plurality of guide members 61a are provided on the mounting base 61b in the form of being aligned at equal intervals in the direction of the long side. The guide structure 61 is provided to guide the prepreg sheets 2 at an upper edge of the middle portion of each guide member 61a. Therefore, the upper edges of the guide members 61a serve as the path described above.

As shown in Fig. 2, the upper heater 79 is provided to be positioned above the guide structure 61 (guide member 61a) forming the path. In addition, the upper heater 79 is provided on the heating device 8 in the form of being supported by a support frame 70 installed on the base 41. Note that, in the present embodiment, as shown in FIG. 1, the upper heater 79 is provided in triplicate in the form of being aligned in the direction of the path.

As shown in FIGS. 2 and 3, the support frame 70 that supports the upper heater 79 is configured by a support plate 71 to which the upper heater 79 is attached and four support columns 73 that support the support plate 71. Among them, the support plate 71 is a plate member having a rectangular shape when seen in a plate thickness direction. The support plate 71 has, with respect to a direction of a long side of an end face thereof, a dimension capable of aligning and supporting the three upper heaters 79, which are provided as described above, in the direction of the long side. In addition, the support plate 71 has, with respect to a direction of a short side of the end face, a dimension larger than a size in the direction of the short side of the mounting base 61b. In addition, each support column 73 is provided in the form of being erected on the base 41 in the vicinity (four locations) of each corner portion of the mounting base 61b.

In addition, the support frame 70 is configured in such a way that the support plate 71 is attached to an upper end of each support column 73 in a state in which the direction of the long side of the support plate 71 coincides with the direction of the path (the direction of the long side of the mounting base 61b). Note that the arrangement of the support plate 71 in the vertical direction (length dimension of the support column 73) is such that the upper heater 79 can be arranged between the support plate 71 and the guide structure 61 (upper edge of the guide member 61a) with a predetermined distance from the guide structure 61. In addition, the support plate 71 is attached to each support column 73 by inserting a male screw portion protruding from an upper end of the support column 73 into the support plate 71 and screwing a nut onto the male screw portion.

The upper heater 79 has a thick plate-like, substantially cuboid part as a main body part 79a, and a heater portion 79a1 is exposed on one end surface in a thickness direction. In addition, the upper heater 79 has an attachment portion 79b that is attached to the support frame 70, and the attachment portion 79b is configured to protrude from the other end surface, in the thickness direction, of the main part 79a.

Each upper heater 79 is attached to the support frame 70 in the form of being suspended from the support frame at the attachment portion 79b. Note that, as for the attachment to the support plate 71 of the support frame 70, the attachment portion 79b of the upper heater 79 is inserted into a hole formed in the support plate 71, and a fastener (not shown) is attached to the attachment portion 79b. The upper heaters 79 are attached to the support frame 70 (support plate 71) in this way, so that the three upper heaters 79 are aligned in the direction of the path and arranged above the guide structure 61 (each guide member 61a) with the heater portions 79a1 facing downward.

As shown in FIGS. 2 and 3, the lateral heaters 53 are provided in the form of being arranged on each of both sides of the guide structure 61 (guide member 61a). In addition, the lateral heaters 53 are provided in the form of three on each of both sides (six in total), which are arranged in the direction of the path (the direction of the long side of the mounting base 61b). Each lateral heater 53 is supported on the base 41 by a support base 45 provided in a oneto-one correspondence with the lateral heater 53.

As shown in FIGS. 2 and 3, each support base 45 that supports the lateral heater 53 consists mainly of a member formed by bending a rectangular plate member into a substantial L-shape. The support base 45 has a support portion 45a on one end side of a bent portion 45c, to which the lateral heater 53 is attached, and an installation portion 45b on the other end side, which is attached to the base 41. In addition, the support base 45 has a substantially triangular reinforcing portion 45d provided in the form of spanning the support portion 45a and the installation portion 45b. Note that the reinforcing portion 45d is provided in two in the form of being spaced apart in a direction parallel to an end edge of the support portion 45a (installation portion 45b).

Each support base 45 is installed on the base 41 with the support portion 45a facing the guide structure 61 (guide member 61a) and the installation portion 45b located on an opposite side to the guide structure 61 with respect to the support portion 45a. In addition, each support base 45 is arranged in such a way that an end face of the support portion 45a is parallel to the direction of the path. Note that each support base 45 is attached to the base 41 by inserting each of thumbscrews 46 into each of two holes 45e and 45e formed in the installation portion 45b, and screwing each of the inserted thumbscrews 46 into each of screw holes (not shown) perforated in the base 41.

In the present embodiment, the two holes 45e and 45e formed in the installation portion 45b are elongated holes that are long in a direction parallel to a side edge of the installation portion 45b, i.e., a direction parallel to a width direction of the heating device 8 (continuous molding machine) in a state in which the support base 45 is arranged as described above. Therefore, an attachment position of the support base 45 to the base 41 can be changed in the width direction. In this way, the heating device 8 is configured to be able to change the attachment position of the support base 45 (lateral heater 53) to the base 41 in the width direction, i.e., in the direction toward and away from the path, and has a position changing structure that enables such a change.

The lateral heater 53 is the same heater as the upper heater 79, and is configured to include a main body part 53a, a heater portion 53a1, and an attachment portion 53b. The lateral heater 53 is attached to the support portion 45a of the support base 45 at the attachment portion 53b. Note that the attachment to the support base 45 is performed by inserting the attachment portion 53b into a hole formed in the support portion 45a and attaching a fastener (not shown) to the inserted attachment portion 53b, on the guide structure 61 side with respect to the support portion 45a.

The lateral heaters 53 are attached to each support base 45 in this way, so that each lateral heater 53 is arranged with the heater portion 53a1 facing the path in the width direction. In addition, each lateral heater 53 is arranged such that the heater portion 53a1 overlaps the guide member 61a in the vertical direction and the upper edge of the guide member 61a for guiding the prepreg sheets 2 is located within a presence range of the heater portion 53a1. Each lateral heater 53 is provided on the base 41 in the form of three on each of both sides, which are arranged in the direction of the path, as described above, in a state of being supported by the corresponding support base 45.

As shown in FIGS. 2 and 3, the lower heater 67 is a different type of a heater from the upper heater 79 and the lateral heater 53, and in the shown example, a so-called sheath heater configured to cover an electric heating wire with a cylindrical metal pipe is adopted. In addition, the lower heater 67 has two sheath heaters 67a and 67a, and each sheath heater 67a has substantially the same size in its longitudinal direction as a heating range by the lateral heater 53 (upper heater 79), i.e., a size of the three lateral heaters 53 (upper heaters 79) arranged. Further, each sheath heater 67a is provided in such a way that its longitudinal direction coincides with the direction of the path below the path (between the middle portion of the guide member 61a of the guide structure 61 and the mounting base 61b). Note that each sheath heater 67a is provided in the form of being supported at both end portions by a pair of holders 63 and 63 installed on the mounting base 61b. The two sheath heaters 67a and 67a are provided in the form of being aligned in the vertical direction.

Note that the holder 63 that supports the sheath heater 67a is a member formed by bending a rectangular plate member into a substantial L-shape. The holder 63 is installed on the mounting base 61b at one end side of the bent portion, and supports each sheath heater 67a at the other end side. In addition, the sheath heater 67a has attachment portions at both ends thereof, and is supported by the holders 63 and 63 in such a way that both attachment portions are inserted into the holders 63 and 63.

Each of the upper heater 79, the lateral heater 53, and the lower heater 67 described above is connected to the temperature controller 43 for controlling a temperature of each heater. Note that, in the present embodiment, it is assumed that the temperature controller 43 is configured to be able to individually set a heating temperature of each heater. That is, for example, even for the three upper heaters 79 provided as described above, different heating temperatures can be set for each of the upper heaters.

In addition, in the present embodiment, all the prepreg sheets 2 in a state in which the ten sheets are overlapped as described above are in a semi-molten state at the time when they have passed through the heating device 8. That is, in the heating device 8, each heater is set to a heating temperature to realize such heating.

Note that a degree of heating to the prepreg sheets 2 corresponds to a heating temperature and a heating time. In addition, the heating time corresponds to a time during which the prepreg sheets 2 pass through the presence range (heating range) of the heater (a time during which the prepreg sheets are present in the heating range). The passing time is determined by the heating range (size in the direction of the path), a time during which the molding operation by the molding device 6 is executed (a time during which the prepreg sheets 2 stop within the heating range), and a moving amount and a moving time of the prepreg sheets 2 in the pulling-out operation by the pulling-out device 7.

In addition, the size of each heater in the direction of the path is known in advance as a device, and the time during which the molding operation is performed and the moving amount and moving time of the prepreg sheets 2 in the pulling-out operation are also determined in advance in the device, so the heating time is determined in advance. Therefore, as for the heating temperature, the temperature for each heater is set appropriately based on the obtained heating time so that all the ten prepreg sheets 2 overlapped as described above are in a semi-molten state at the time when they have finally passed through the third heater in the direction of the path.

Note that the prepreg sheets 2 are molded in the molding device 6 to have the so-called C-shaped cross-sectional shape described above (a shape in which the angle formed by each side portion with respect to the intermediate portion is 90°). Thereby, the prepreg sheets 2 continuously directed toward the molding device 6 have a shape closer to the C shape at a portion closer to the molding device 6 on the upstream side of the molding device 6. Therefore, even at the position of the heating device 8, the prepreg sheets 2 thereof have a smaller angle formed by each of the side portions with respect to the intermediate portion at a portion closer to the downstream side. As a result, the positions of both side edges of the prepreg sheets 2 located in the heating device 8 are closer to the guide structure 61 on a further downstream side.

Therefore, in the heating device 8 of the present embodiment, each of the three lateral heaters 53, which are provided on each side of the guide structure 61, is installed such that the lateral heater on the further downstream side is arranged closer to the guide structure 61. More specifically, the heating device 8 has the position changing structure as described above, and is configured to be able to change the attachment position of the support base 45, which supports the lateral heater 53, to the base 41 in the width direction (the direction toward and away from the path). Specifically, the arrangement of the support base 45 with respect to the base 41 in the width direction can be arbitrarily set within the range of the elongated hole because the hole 45e, which is formed in the installation portion 45b of the support base 45 and into which the thumbscrew 46 is inserted, is formed in the elongated hole shape as described above. Therefore, each of the lateral heaters 53 is attached to the support base 45 such that the lateral heater on the downstream side is arranged at a position close to the guide structure 61.

In addition, the continuous molding machine 1 in the present embodiment includes a preliminary molding device 9, in addition to the devices constituting the present invention described above. Note that the preliminary molding device 9 molds in advance (preliminary molding) the prepreg sheets 2 into a shape close to a cross-sectional shape of the fiber-reinforced composite material 5 before molding (main molding) by the molding device 6, in order to prevent cracks and wrinkles from being generated in the prepreg sheets 2 as much as possible when the prepreg sheets 2 are pressurized (formed) by the molding device 6. The preliminary molding device 9 is provided between the supply device 4 (sheet guide 15) and the heating device 8, as shown in FIG. 1. That is, the preliminary molding is performed on the prepreg sheets 2 that are to be heated by the heating device 8.

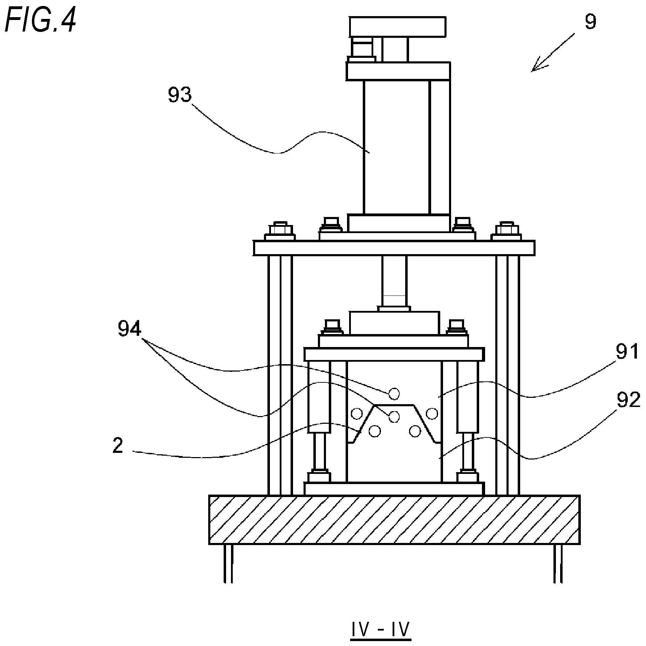

The preliminary molding device 9 has basically a similar configuration to that of the molding device 6, and as shown in FIG. 4, includes an upper mold 91 having a groove opening on a lower surface, a lower mold 92 that can fit into the groove with a slight gap, and an air cylinder 93 that pressurizes the prepreg sheets 2 by driving the upper mold 91 in the vertical direction. In addition, the preliminary molding device 9 includes a heating mechanism 94 built in the upper mold 91 and the lower mold 92, as a heating mechanism 94 for heating the pressurized prepreg sheets 2.

Note that, in the molding device 6, the upper mold 21a and the lower mold 21b are configured so that a cross-sectional shape of the fiber-reinforced composite material 5 molded as described above is a so-called C-shape (a shape in which an angle between the intermediate portion and each of the side portions is 90°). On the other hand, the preliminary molding by the preliminary molding device 9 is for molding in advance into a shape close to the cross-sectional shape of the fiber-reinforced composite material 5 (prepreg sheets 2) by the main molding, as described above. Therefore, the preliminary molding is not to mold the prepreg sheets 2 so that the angle between the intermediate portion and each of the side portions is 90°, but to mold the prepreg sheets 2 so that the angle between the intermediate portion and each of the side portions is 120°. Therefore, the upper mold 91 is configured to have a cross-sectional shape in which the groove expands downward. In addition, the lower mold 92 is configured to have a trapezoidal cross-sectional shape in which an upper side is shorter than a lower side.

In addition, the preliminary molding device 9 is connected to the main control device of the continuous molding machine 1 described above, and a pressure applied by the air cylinder 93 to the prepreg sheet 2 via the upper mold 91 is controlled by the main control device. However, the pressure is set to a pressure lower than a pressure that is applied to the prepreg sheets 2 by the upper mold 21a in the molding device 6. In addition, a temperature at which the heating mechanism 94 heats the prepreg sheets 2 is also controlled by the main control device. However, the temperature is set to a temperature (a temperature at which the prepreg sheets 2 are slightly softened) lower than the melting point of the thermoplastic resin impregnated into the prepreg sheets 2. Note that, in the present embodiment, a temperature at which the molding device 6 heats the prepreg sheets 2 is also set to a temperature lower than the melting point. Further, the temperature at which the heating mechanism 94 heats the prepreg sheets 2 is set to a temperature higher than the temperature at which the molding device 6 heats the prepreg sheets 2.

Operations of the continuous molding machine 1 according to the present embodiment including the heating device 8 and the preliminary molding device 9 configured as described above will be described as follows.

First, the ten prepreg sheets 2 pulled out from the supply device 4 side in a state of being overlapped vertically as described above are guided into the preliminary molding device 9. In the preliminary molding device 9, the prepreg sheets 2 are subjected to the preliminary molding described above, and the prepreg sheets 2 are molded so that the angle between the intermediate portion and each of the side portions is 120°, and thus become a shape close to a cross-sectional shape of the fiber-reinforced composite material 5. Note that the preliminary molding is performed substantially at the same time as the molding operation (main molding) that is performed in the molding device 6. Thereafter, when the preliminary molding (main molding) is completed, the pulling-out operation by the pulling-out device 7 is started, and the prepreg sheets 2 are advanced by an amount corresponding to the pulling-out operation. Thereby, the preliminarily molded portion of the prepreg sheets 2 is pulled out from the preliminary molding device 9 and introduced into the heating device 8.

Then, in the heating device 8, as shown in FIG. 2, the prepreg sheets 2 are guided at the intermediate portion by the upper edge (the path) of the guide member 61a of the guide structure 61, and are heated by each heater in that state. Note that, in the heating device 8, the intermediate portion of the prepreg sheets 2 is mainly heated by each upper heater 79, and each side portion is mainly heated by each lateral heater 53. In addition, the inner portion of the prepreg sheets 2 is heated by the lower heater 67. Thereby, all the 10 overlapped prepreg sheets 2 are in a semi-molten state at the time when they have passed through the heating device 8. Then, the prepreg sheets 2 in the semi-molten state are pulled out from the inside of the heating device 8 and introduced into the molding device 6 where they are molded (main molding) by the molding device 6, along with the above-described process.

According to the continuous molding machine 1 in the present embodiment configured as described above, before being guided into the molding device 6, all the ten overlapped prepreg sheets 2 are in the semi-molten state, and in that state, the main molding is performed by the molding device 6. Therefore, as compared with the continuous molding machine of the related art in which the main molding is performed while making all the prepreg sheets into a semi-molten state in the molding device, the time required for the main molding can be shortened. By shortening the time required for the main molding in this way, a time during which the pressurization mold 21 is in contact with the prepreg sheets 2 (fiber-reinforced composite material 5) can be shortened. As a result, it is possible to prevent an occurrence of quality problems in the fiber-reinforced composite material 6 as much as possible, which are caused by the long-term contact between the pressurization mold 21 and the prepreg sheets 2 (fiber-reinforced composite material 5).

In addition, since all the prepreg sheets 2 are made into a semi-molten state in the heating device 8, it is not necessary to make the prepreg sheets 2 into a semi-molten state in the molding device 6, and the temperature of the pressurization mold 21 can be set to a temperature lower than the melting point. Therefore, in the molding device 6, the temperature of the pressurization mold 21 is set to the lower temperature. Thereby, it is possible to more effectively prevent the thermoplastic resin from adhering to the pressurization mold 21.

In addition, the heating device 8 includes the lateral heaters 53 in addition to the upper heater 79, and the plurality of lateral heaters 53 are aligned along the path. Further, the heating device 8 has the position changing structure capable of changing the attachment position of each lateral heater 53 in the width direction (the direction toward and away from the path), and the lateral heaters 53 are arranged such that the lateral heater on the further downstream side of the path is located at the position closer to the guide structure 61, for the prepreg sheets 2 whose angle of each of the side portions relative to the intermediate portion gradually decreases toward the molding device 6. Thereby, it is possible to heat the side portion more appropriately at the position where each lateral heater 53 is arranged.

Note that, the present invention is not limited to the embodiment described above (the above embodiment), and can also be implemented in the following modified embodiments (1) to (6).
(1) In the above embodiment, all the ten overlapped prepreg sheets 2 are in a semi-molten state, and the heating temperature in the heating device 8 is set to a temperature at which such heating is possible. In other words, the heating device 8 is configured so that such a heating temperature can be set. However, in the present invention, the heating device may be configured to make at least a direct heating target into a semi-molten state (to heat at least a direct heating target to the melting point or higher of the thermoplastic resin).
   Specifically, the heating device may be configured to heat a reinforcing fiber base material in which a plurality of sheets (10 sheets in the above embodiment) are overlapped to a heating temperature at which only a reinforcing fiber base material that is a direct heating target by each heater (a direct heating target by the upper heater and the lateral heater is the outermost reinforcing fiber base material, a direct heating target by the lower heater is the innermost reinforcing fiber base material) or the reinforcing fiber base materials less than half (5 sheets) of a total number of sheets including the direct heating target is in a semi-molten state.
   Note that when the heating device is configured in this way, a reinforcing fiber base material that is not in a semi-molten state in the heating device is made into a semi-molten state in the molding device. For this reason, the temperature of the pressurization mold in the molding device is set to a temperature at which the reinforcing fiber base material is in a semi-molten state. However, even in this case, since some of the reinforcing fiber base materials are in a semi-molten state at the time of introduction into the molding device, a time until all the overlapped reinforcing fiber base materials are in a semi-molten state is shortened, as compared with the continuous molding machine of the related art in which all the reinforcing fiber base materials are made into a semi-molten state with only the pressurization mold. As a result, the time during which the pressurization mold is in contact with the reinforcing fiber base material can be shortened. Therefore, even in this case, it is possible to prevent the occurrence of quality problems in the fiber-reinforced composite material as described above as much as possible, which are caused by the long-term contact between the pressurization mold and the reinforcing fiber base material.
(2) As for the number of the heaters, in the above embodiment, the heating device 8 includes the three upper heaters 79, the three lateral heaters 53 on each of both sides of the guide structure 61, and one lower heater 67. However, in the present invention, the number of each heater is not limited to the number in the above embodiment.
   Specifically, a degree of heating (heating state) as to what extent (all in the above embodiments) the overlapped reinforcing fiber base materials are in a semi-molten state corresponds to the heating temperature and the heating time, as described above. That is, the heating temperature and the heating time are conditions for realizing a desired heating state. Note that the heating temperature is set within a range in which heating is possible by the heater, and is controlled by the temperature controller. In addition, the heating time is determined by a size of each heater in the direction of the path, a time during which the molding operation is performed, and a moving amount and a moving time of the reinforcing fiber base material in the pulling-out operation. Therefore, after determining in advance the degree of heating state, the heating conditions (heating temperature and heating time) for realizing a desired heating state may be determined, and then the number of each heater may be determined as appropriate based on the determined heating conditions and a configuration (heatable temperature, size etc.) of the heater to be installed.
   For example, in realizing the same heating state as in the above embodiment, when the heating temperature of each heater of the upper heater and the lateral heater is higher than that in the above embodiment, or the size of each heater in the direction of the path is larger than that in the above embodiment, the number of each heater can be made smaller (two or one) than that in the above embodiment. On the other hand, when the heating temperature of each heater is lower than that in the above embodiment or the size in the direction of the path is smaller, the heaters more than those in the above embodiment are provided.
   In addition, as for the lower heater, the lower heater is provided to be over the heating range by the upper heater (the range in which the upper heater is provided), but the number is not limited to one as in the above embodiment, and is set as appropriate according to the configuration (heatable temperature, size, etc.). Note that, although the lower heater 67 in the above embodiment uses the sheath heater 67a, the lower heater is not limited to such a configuration. For example, the lower heater may be configured similarly to the upper heater or may be configured in the same way as the above embodiment and the size in the direction of the path may be different from that in the above embodiment.
(3) In the above embodiment, the heating device 8 includes the upper heater 79, the lateral heater 53, and the lower heater 67, as heaters. However, the heating device according to the present invention may include a heater (upper heater) provided to be located above the path of the reinforced fiber base material, and the lateral heater and the lower heater may be provided as appropriate according to the cross-sectional shape of the fiber-reinforced composite material to be molded.
   For example, when the cross-sectional shape of the fiber-reinforced composite material to be molded is a so-called I-shape, the heating device may include only the upper heater and lower heater because the reinforcing fiber base material in the heating device does not have a portion corresponding to the side portion of the prepreg sheets 2 in the above embodiment. Further, in this case, the lower heater may be omitted if it is possible to make the reinforcing fiber base material passing through the heating device into a semi-molten state with only the upper heater.
(4) In the above embodiment, the heating device 8 has the position changing structure that allows the attachment position of each lateral heater 53 to be changed in the width direction (direction toward and away from the path). However, even when the heating device includes the lateral heater, the heating device may not necessarily have the position change structure. For example, when the continuous molding machine is for manufacturing only a fiber-reinforced composite material having a predetermined cross-sectional shape and the thermoplastic resin impregnated in the reinforcing fiber base material to be molded is not changed to one with a different melting point, there is no need to change the attachment position of the lateral heater in the width direction, so the heating device does not need to have the position changing structure described above.
(5) In the above embodiment, the support base 45 that supports the lateral heater 53 is provided such that the end face of the support portion 45a is substantially parallel to the direction of the path. Thereby, the lateral heater 53 supported by the support portion 45a is provided in such a way that the heater portion 53a1 is substantially parallel to the direction of the path. However, in the case where the heating device includes the lateral heater, the way of providing the lateral heater is not limited to such a way that the heater portion is provided substantially parallel to the direction of the path.
   Specifically, the heating device is provided with the lateral heater when the fiber-reinforced composite material is molded so that the fiber-reinforced composite material has a portion corresponding to the side portion in the fiber-reinforced composite material 5 of the above embodiment. When the reinforcing fiber base material is molded in this way, the reinforcing fiber base material is closer to the inner side of the reinforcing fiber base material as the upper edge thereof is positioned on the further downstream side of the path, as described above. As a result, the side edge of the reinforcing fiber base material forms an angle with respect to the direction of the path in a plan view. Therefore, in this case, the lateral heater may be provided at an angle to the direction of the path so that the heater portion is substantially parallel to the side edge of the reinforcing fiber base material.
   Further, in the above embodiment, the support base 45 forms a substantial L-shape and is attached to the base 41 at the other end side of the bent portion, and the lateral heater 53 is attached to one end side of the bent portion 45c of the support base 45. Therefore, the lateral heater 53 is provided in such a way that the heater portion 53a1 is substantially parallel to the vertical direction. However, the way of providing the lateral heater is not limited to such a way that the heater portion is provided substantially parallel to the vertical direction.
   Specifically, when molding the reinforcing fiber base material as described above, the reinforcing fiber base material is in a state in which a portion corresponding to the side portion forms an angle greater than 90° with respect to a portion corresponding to the intermediate portion, within the range where the heating device is present in the direction of the path. In other words, within the above range, the reinforcing fiber base material is in a state in which a portion corresponding to the side portion forms an angle with respect to the vertical direction. Therefore, in this case, the lateral heater may be provided in a state of being inclined with respect to the vertical direction so that the heater portion slightly obliquely faces downward at the (each) position where the lateral heater is arranged.
(6) In the above embodiment, the upper heater 79 in the heating device 8 is provided in a state of being fixed to the support frame 70 above the path (the guide member 61a in the guide structure 61). However, the heating device may be configured such that the attachment position of the upper heater is changeable in the vertical direction. This makes it possible to change the degree of heating to the reinforcing fiber base material by the upper heater even by changing the distance between the upper heater and the reinforcing fiber base material.

Note that the present invention is not limited to the above embodiment, and can be appropriately changed without departing from the gist of the present invention.

### REFERENCE SIGNS LIST

1: continuous molding machine
2: prepreg sheet
3: material roll
4: supply device
5: fiber-reinforced composite material
6: molding device
7: pulling-out device
8: heating device
9: preliminary molding device
11: frame
12: support shaft
13: guide roller
15: sheet guide
21: pressurization mold
21a, 91: upper mold
21b, 92: lower mold
23: drive device
25, 94: heating mechanism
25a: upper heating portion
25b: lower heating portion
31: gripping mechanism
31a: drive device
31b: gripping plate
33: pulling-out mechanism
33a: servo motor
41: base
43: temperature controller
45: support base
45a: support portion
45b: installation portion
45c: bent portion
45d: reinforcing portion
45e: hole
46: thumbscrew
53: lateral heater
53a, 79a: main body part
53a1, 79a1: heater portion
53b, 79b: attachment portion
61: guide structure
61a: guide member
61b: mounting base
63: holder
67: lower heater
70: support frame
71: support plate
73: support column
79: upper heater
93: air cylinder

## Claims

1. A continuous molding machine (1) for manufacturing a fiber-reinforced composite material (5) by molding a sheet-like reinforcing fiber base material formed by impregnating thermoplastic resin into a reinforcing fiber material, in which the continuous molding machine includes a molding device (6) configured to perform a molding operation of pressurizing and molding a plurality of the overlapped reinforcing fiber base materials supplied from a supply device (4),
wherein the continuous molding machine (1) comprises a heating device (8) including a non-contact heater provided between the supply device (4) and the molding device (6) and the heater is configured to be able to make a temperature of at least a direct heating target a melting point of the thermoplastic resin within a predetermined heating time according to a time of the molding operation.

2. The continuous molding machine according to Claim 1, wherein the heating device (8) includes:
a lateral heater (53) that is the heater provided on a side of a path of the reinforcing fiber base materials, and
a position changing structure capable of changing an attachment position of the lateral heater (53) in a direction toward and away from the path.

3. The continuous molding machine according to Claim 2, wherein the lateral heater (53) is provided in plural along a traveling direction of the reinforcing fiber base materials.
